# FASCICULE DE BREVET EUROPEEN

(11) **EP 3 289 054 B1**
(45) Date de publication et mention de la délivrance du brevet: **24.07.2024**
(21) Numéro de dépôt: 16720100.3
(22) Date de dépôt: 29.04.2016
(51) Int. Cl.: C10M 169/04, C10N 10/04, C10N 10/12, C10N 20/02, C10N 20/04, C10N 30/00, C10N 30/02, C10N 30/04, C10N 30/06, C10N 30/10, C10N 40/25

(54) **COMPOSITION LUBRIFIANTE ULTRA-FLUIDE**
ULTRAFLÜSSIGE SCHMIERMITTELZUSAMMENSETZUNG
ULTRA-FLUID LUBRICATING COMPOSITION

(30) Priorité: 30.04.2015 FR 1553930
(43) Date de publication de la demande: 07.03.2018
(73) Titulaire: TotalEnergies OneTech, 92400 Courbevoie (FR)
(72) Inventeur: BROUTIN, Laura, 69360 Ternay (FR); OBRECHT, Nicolas, 67210 Meistratzheim (FR)
(74) Mandataire: Lavoix
(86) Numéro de dépôt international: PCT/EP2016/059581
(87) Numéro de publication internationale: WO 2016/174186

(56) Documents cités:
- WO-A1-2014/076240
- US-A- 5 627 146
- US-A1- 2010 190 671
- US-B1- 6 232 279
- STEPHAN FENGLER: "How we're making lubricants more efficient", 26 March 2015 (2015-03-26), XP055250501, Retrieved from the Internet <URL:http://corporate.evonik.de/_layouts/Websites/Internet/DownloadCenterFileHandler.ashx?fileid=2168>

## Description

L'invention concerne le domaine des compositions lubrifiantes pour véhicules à moteur. L'invention fournit une composition lubrifiante de grade selon la classification SAEJ300 défini par la formule (X) W (Y) dans laquelle X représente 0 ou 5 et Y représente un nombre entier allant de 4 à 20. Cette composition lubrifiante comprend au moins une huile polyalphaoléfinique (PAO), de 10 à 80 % en poids de la composition d'au moins une huile de groupe V et au moins un polymère en peigne. L'invention concerne également l'utilisation de cette composition lubrifiante pour améliorer le Fuel Eco (FE) d'un lubrifiant ou pour réduire la consommation de carburant d'un moteur, en particulier d'un moteur de véhicule, notamment d'un moteur d'un véhicule hybride.

Les besoins en lubrifiants haute performance augmentent. En particulier, du fait de conditions d'utilisation dont la sévérité s'accroit, par exemple du fait de températures ou de contraintes mécaniques très élevées.

L'espacement des vidanges et la diminution de la taille des systèmes de lubrification entraînent également une augmentation du besoin en lubrifiants haute performance. L'efficacité énergétique et notamment l'amélioration du Fuel Eco (FE) des lubrifiants ou la réduction de la consommation de carburant des moteurs, en particulier des moteurs de véhicule, sont des objectifs de plus en plus importants et conduisent à l'utilisation croissante de lubrifiants haute performance.

Les lubrifiants haute performance doivent donc posséder des propriétés améliorées, en particulier en ce qui concerne la viscosité cinématique, l'indice de viscosité, la volatilité, la viscosité dynamique ou le point d'écoulement à froid.

La stabilité thermique et la résistance à l'oxydation sont également des propriétés à améliorer pour les lubrifiants haute performance.

Une toxicité réduite et une bonne miscibilité avec d'autres lubrifiants ou d'autres matériaux sont également des propriétés à rechercher pour les lubrifiants haute performance.

Ces besoins sont particulièrement accrus lors de la lubrification d'un moteur d'un véhicule hybride, en particulier pour ce qui concerne la réduction des frottements au sein du moteur. L'amélioration des conditions d'utilisation, par exemple à des températures de fonctionnement particulières, doit également être visée, en particulier lors de la montée en température du moteur.

Afin d'améliorer l'efficacité énergétique des moteurs automobiles via la réduction des frottements, les lubrifiants moteurs se déclinent en grade de viscosité de plus en plus fluide. Ce phénomène est d'autant plus important que les moteurs fonctionnent sur des cycles basse température comme l'impose souvent les trajets urbains dans la plupart des grandes villes de la planète. Et ce besoin est d'autant plus important pour les moteurs hybrides. Au-delà de la réduction du grade de viscosité d'autres solutions permettent d'accroître les gains FE apportés par le lubrifiant moteur.

Les compositions lubrifiantes pour moteur doivent également permettre d'améliorer la propreté du moteur. Elles doivent également être conformes aux limites fixées par l'industrie automobile.

Le document US 2010/190671 A divulgue l'utilisation des polymères en peigne dans des compositions lubrifiantes en tant qu'additif pour la diminution de la consommation de carburant de véhicules.

Le document US 6 232 279 B divulgue des compositions lubrifiantes possédant une faible viscosité comprenant une huile de base et un polymère à bloc statistique, et l'utilisation desdites compositions lubrifiantes comme huile pour moteur dans un moteur à combustion interne pour améliorer la performance d'économie de carburant du moteur.

La présentation "How we're making lubricants more efficient" de Stephan Fengler (Evonik Industries) se réfère à une nouvelle génération de polymères en peigne réduisant la consommation de carburant.

Il existe donc un besoin de lubrifiants haute performance permettant d'apporter une solution à tout ou partie des problèmes des lubrifiants de l'état de la technique.

Ainsi, l'invention fournit une composition lubrifiante de grade selon la classification SAEJ300 défini par la formule (I)

(X) W (Y) (I)

dans laquelle
▪ X représente 0 ou 5 ;
▪ Y représente un nombre entier allant de 4 à 20 ; et
comprenant
(a) au moins une huile polyalphaoléfinique (PAO) dont la viscosité cinématique mesurée à 100 °C selon la norme ASTM D445 va de 1,5 à 8 mm².s⁻¹ ;
(b) de 10 à 80 % en poids de la composition d'au moins une huile de groupe V dont la viscosité cinématique mesurée à 100 °C selon la norme ASTM D445 va de 1,5 à 8 mm².s⁻¹, telle que définie ci-après ;
(c) au moins un polymère en peigne dont les chaînes pendantes comprennent au moins 50 atomes de carbone et choisi parmi les copolymères d'au moins une polyoléfine et d'au moins un poly(alkyl)methacrylate ; les copolymères d'au moins une polyoléfine et d'au moins un poly(alkyl)acrylate.

La composition lubrifiante selon l'invention possède un grade de viscosité particulièrement avantageux. Le grade de viscosité de la composition lubrifiante selon l'invention peut notamment être choisi parmi
▪ un grade selon la classification SAEJ300 défini par les formules (II) ou (III)

   0 W (Y) (II)

   5 W (Y) (III)

   dans lesquelles Y représente un nombre entier allant de 4 à 20, en particulier allant de 4 à 16 ou de 4 à 12 ; ou
▪ un grade selon la classification SAEJ300 défini par les formules (IV) ou (V)

   (X) W 8 (IV)

   (X) W 12 (V)

   dans lesquelles X représente 0 ou 5.

De manière préférée, le grade selon la classification SAEJ300 de la composition lubrifiante selon l'invention est choisi parmi 0W4, 0W8, 0W12, 0W16, 0W20, 5W4, 5W8, 5W12, 5W16, 5W20. De manière plus préférée, la composition lubrifiante selon l'invention possède un grade selon la classification SAEJ300 de 0W12.

De manière également préférée, la viscosité cinématique mesurée à 40 °C selon la norme ASTM D445 de la composition lubrifiante selon l'invention va de 12 à 30 mm².s⁻¹, de préférence de 14 à 25 mm².s⁻¹.

La composition selon l'invention comprend au moins une huile polyalphaoléfinique (PAO), de 10 à 80 % en poids de la composition d'au moins une huile de groupe V et au moins un polymère en peigne.

De manière préférée, la composition lubrifiante selon l'invention comprend une PAO dont la viscosité cinématique, mesurée à 100°C selon la norme ASTM D445, va de 1,5 à 6 mm².s⁻¹ ou de 2 à 8 mm².s⁻¹ ou encore de 2 à 6 mm².s⁻¹.

La masse moléculaire moyenne en poids de la PAO peut varier assez largement. De manière préférée, la masse moléculaire moyenne en poids de la PAO est inférieure à 500 Da. La masse moléculaire moyenne en poids de la PAO peut également aller de 50 à 500 Da, de 50 à 350 Da ou encore de 50 à 300 Da.

De manière également préférée, la composition lubrifiante selon l'invention comprend une PAO légère, en particulier une PAO dont la viscosité cinématique à 100 °C, mesurée selon la norme ASTM D445, allant de 3 à 4 mm².s⁻¹, et qui comprend plus de 50 % en poids de 9-methyl-11-octyl-henicosane, trimère de 1-décène de formule (A)

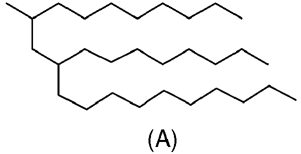

Outre la PAO, la composition lubrifiante selon comprend une huile de groupe V en une quantité allant de 10 à 80 % en poids de la composition lubrifiante. De manière préférée, la composition lubrifiante selon l'invention comprend de 20 à 80 %, de 20 à 60 %, de 20 à 50 % ou de 30 à 80 %, de 30 à 60 %, de 30 à 50 % en poids de la composition d'une huile de groupe V. De manière plus préférée, la composition lubrifiante selon l'invention comprend de 35 à 45 %, par exemple 40 %, en poids de la composition d'huile de groupe V.

La composition lubrifiante selon l'invention comprend une huile de groupe V choisie parmi un monoester ou un polyalkylene-glycol (PAG).

Le monoester répond à la formule (B1) ; 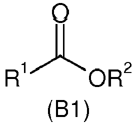 dans laquelle
▪ R¹ représente un groupement hydrocarboné, saturé ou insaturé, linéaire ou ramifié, comprenant de 14 à 24 atomes de carbone ;
▪ R² représente un groupement hydrocarboné, saturé ou insaturé, linéaire ou ramifié, comprenant de 2 à 18 atomes de carbone ;

Comme monoester plus préféré, on peut citer un monoester de formule (B1) dans laquelle
▪ R¹ est un groupement saturé et R² est un groupement insaturé ; ou
▪ R¹ est un groupement insaturé et R² est un groupement saturé ; ou
▪ R¹ et R² sont des groupements saturés ; ou
▪ R¹ et R² sont des groupements insaturés ; ou encore
un monoester de formule (B1) dans laquelle
▪ R¹ représente un groupement hydrocarboné, saturé ou insaturé, linéaire ou ramifié, comprenant de 14 à 20 atomes de carbone, préférentiellement de 14 à 18 atomes de carbone, plus préférentiellement de 16 à 18 atomes de carbone ; ou
▪ R² représente un groupement hydrocarboné, saturé ou insaturé, linéaire ou ramifié, comprenant de 3 à 14 atomes de carbone, préférentiellement de 4 à 12 atomes de carbone, plus préférentiellement de 4 à 10 atomes de carbone ; ou
▪ R¹ est un groupement linéaire et R² est un groupement ramifié ; ou
▪ R¹ est un groupement ramifié et R² est un groupement linéaire ; ou
▪ R¹ et R² sont des groupements linéaires ; ou
▪ R¹ et R² sont des groupements ramifiés.

Comme monoester particulièrement préféré, on peut citer un monoester de formule (B1) dans laquelle seul R¹, seul R² ou R¹ et R² sont choisis parmi
▪ un groupement saturé linéaire ;
▪ un groupement saturé ramifié comprenant de 1 à 5 chaînes de ramification ;
▪ un groupement saturé ramifié dont les chaînes de ramification comprennent de 1 à 5 atomes de carbone ;
▪ un groupement saturé ramifié comprenant de 1 à 5 chaînes de ramification et dont les chaînes de ramification comprennent de 1 à 5 atomes de carbone.

Comme exemples de monoesters préférés, on peut citer
▪ les stéarates, de préférence les stéarates d'alkyle et les stéarates d'alcényle, plus préférentiellement les stéarates de C₄-C₁₀-alkyle, en particulier le stéarate de butyle, le stéarate de pentyle, le stéarate d'hexyle, le stéarate d'heptyle, le stéarate d'octyle, le stéarate de nonyle, le stéarate de décyle ;
▪ les oléates, de préférence les oléates d'alkyle et les oléates d'alcényle, plus préférentiellement les oléates de C₄-C₁₀-alkyle, en particulier l'oléate de butyle, l'oléate de pentyle, l'oléate d'hexyle, l'oléate d'heptyle, l'oléate d'octyle, l'oléate de nonyle, l'oléate de décyle .

Comme exemples de monoesters préférés, on peut citer également les monoesters alcéniques et les monoesters alkyliques, de préférence les monoesters C₂-C₁₀-alkyliques, en particulier les monoesters éthyliques, les monoesters propyliques, les monoesters butyliques, les monoesters pentyliques, les monoesters hexyliques.

Le polyalkylene-glycol (PAG) répond à la formule (B2) 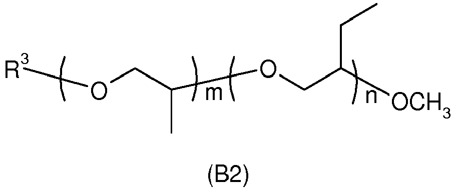 dans laquelle
▪ R³ représente un groupement C₁-C₃₀-alkyl linéaire ou ramifié ;
▪ m et n représentent indépendamment un nombre moyen allant de 1 à 5.

De manière préférée pour le PAG de formule (B2), R³ représente un groupement choisi parmi un groupement C₈-alkyl linéaire ; un groupement C₈-alkyl ramifié ; un groupement C₉-alkyl linéaire ; un groupement C₉-alkyl ramifié ; un groupement C₁₀-alkyl linéaire ; C₁₀-alkyl ramifié ; un groupement C₁₁-alkyl linéaire ; un groupement C₁₁-alkyl ramifié ; un groupement C₁₂-alkyl linéaire ; un groupement C₁₂-alkyl ramifié ; un groupement C₁₃-alkyl linéaire ; un groupement C₁₃-alkyl ramifié ; un groupement C₁₄-alkyl linéaire ; un groupement C₁₄-alkyl ramifié ; un groupement C₁₅-alkyl linéaire ; un groupement C₁₅-alkyl ramifié.

De manière également préférée pour le PAG de formule (B2),
▪ m est supérieur ou égal à n ; ou
▪ m représente un nombre moyen allant de 2 à 4,5, notamment un nombre moyen allant de 2 à 3,5 ; ou
▪ n représente un nombre moyen allant de 1,5 à 4, notamment un nombre moyen allant de 1,5 à 3.

De manière plus préférée pour le PAG de formule (B2), m représente un nombre moyen égal à 2,5 et n représente un nombre moyen égal à 2 ou m représente un nombre moyen égal à 3,5 et n représente un nombre moyen égal à 2,8.

De manière avantageuse pour la composition lubrifiante selon l'invention, le PAG de formule (B2) possède
▪ une viscosité cinématique à 100 °C, mesurée selon la norme ASTM D445, allant de 2,5 à 4,5 mm².s^{-1 ;} ou
▪ un indice de viscosité supérieur à 160 ou compris entre 160 et 210 ; ou
▪ un point d'écoulement inférieur à -40 °C ; ou
▪ une viscosité dynamique (CCS) à -35 °C, mesurée selon la norme ASTM D5293 inférieure à 1 200 mPa.s.

Un exemple de PAG préféré est un PAG de formule (B2) dans laquelle m représente un nombre moyen égal à 2,5 et n représente un nombre moyen égal à 2 et dont la viscosité cinématique à 100 °C, mesurée selon la norme ASTM D445, va de 2,5 à 3,5 mm².s^{-1 ;} l'indice de viscosité est compris entre 160 et 180 ; le point d'écoulement est inférieur à - 40 °C ; la viscosité dynamique (CCS) à -35 °C, mesurée selon la norme ASTM D5293 est inférieure à 500 mPa.s.

Un autre exemple de PAG préféré est un PAG de formule (B2) dans laquelle m représente un nombre moyen égal à 3,5 et n représente un nombre moyen égal à 2,8 et dont la viscosité cinématique à 100 °C, mesurée selon la norme ASTM D445, va de 3,5 à 4,5 mm².s^{-1 ;} l'indice de viscosité est compris entre 180 et 210 ; le point d'écoulement est inférieur à -50 °C ; la viscosité dynamique (CCS) à -35 °C, mesurée selon la norme ASTM D5293 est inférieure à 1 200 mPa.s.

Comme autre polyalkylene-glycol (PAG) non compris dans la portée des revendications, on peut citer un polymère à blocs de formule (B3) ou un polymère statistique de formule (B3) 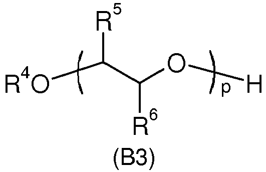 dans laquelle
▪ R⁴ représente un groupement C₁-C₃₀-alkyl linéaire ou ramifié, de préférence un groupement C₈-C₁₂-alkyl linéaire ou ramifié ;
▪ p représente un nombre allant de 2 à 60, de préférence de 5 à 30 ou de 7 à 15 ;
▪ R⁵ et R⁶, identiques ou différents, représentent indépendamment un atome d'hydrogène ou un groupement C₁-C₂-alkyl.

Comme autres polyalkylene-glycol (PAG) particuliers non compris dans la portée des revendications, on peut citer
o un polymère à blocs de formule (B4) ou un polymère statistique de formule (B4) 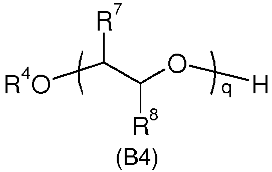 dans laquelle
   ▪ R⁴ représente un groupement C₁-C₃₀-alkyl linéaire ou ramifié, de préférence un groupement C₈-C₁₂-alkyl linéaire ou ramifié ;
   ▪ q représente un nombre allant de 2 à 60, de préférence de 5 à 30 ou de 7 à 15 ;
   ▪ R⁷ et R⁸ représentent un atome d'hydrogène ; ou R⁷ représente un atome d'hydrogène et R⁸ représente un groupement methyl ; ou R⁷ représente un groupement methyl et R⁸ représente atome d'hydrogène ; ou R⁷ et R⁸ représentent un groupement methyl ; ou R⁷ représente un groupement ethyl et R⁸ représente un atome d'hydrogène ; ou R⁷ représente un atome d'hydrogène et R⁸ représente un groupement ethyl ;
o un polymère à blocs de formule (B5) ou un polymère statistique de formule (B5) 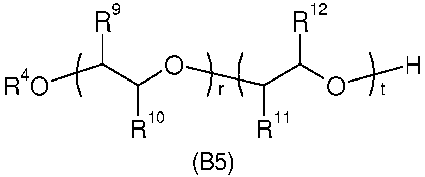 dans laquelle
   ▪ R⁴ représente un groupement C₁-C₃₀-alkyl linéaire ou ramifié, de préférence un groupement C₈-C₁₂-alkyl linéaire ou ramifié ;
   ▪ r et t représentent indépendamment un nombre allant de 1 à 30, de préférence de 2 à 15 ou de 2 à 8 ;
   ▪ R⁹ et R¹⁰ représentent un atome d'hydrogène ; ou R⁹ représente un atome d'hydrogène et R¹⁰ représente un groupement methyl ; ou R⁹ représente un groupement methyl et R¹⁰ représente atome d'hydrogène ; ou R⁹ et R¹⁰ représentent un groupement methyl ; ou R⁹ représente un groupement ethyl et R¹⁰ représente un atome d'hydrogène ; ou R⁹ représente un atome d'hydrogène et R¹⁰ représente un groupement ethyl ;
   ▪ R¹¹ et R¹² représentent un atome d'hydrogène ; ou R¹¹ représente un atome d'hydrogène et R¹² représente un groupement methyl ; ou R¹¹ représente un groupement methyl et R¹² représente atome d'hydrogène ; ou R¹¹ et R¹² représentent un groupement methyl ; ou R¹¹ représente un groupement ethyl et R¹² représente un atome d'hydrogène ; ou R¹¹ représente un atome d'hydrogène et R¹² représente un groupement ethyl.

Comme autres polyalkylene-glycol (PAG) particuliers non compris dans la portée des revendications, on peut citer un polymère à blocs de formule (B6) ou un polymère statistique de formule (B6) 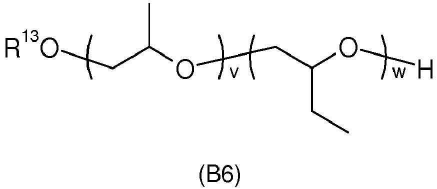 dans laquelle
▪ R¹³ représente un groupement C₈-C₁₂-alkyl linéaire ou ramifié ;
▪ v représente un nombre allant de 2 à 6 ;
▪ w représente un nombre allant de 2 à 5.

Outre une PAO et une huile de groupe V, la composition lubrifiante selon l'invention comprend un polymère à peigne.

De manière préférée, le polymère à peigne comprend des chaînes pendantes obtenues par polymérisation ou par copolymérisation d'oléfines. De manière plus préférée, le polymère à peigne comprend des chaînes pendantes obtenues par polymérisation ou par copolymérisation d'oléfines comprenant de 8 à 17 atomes de carbone, en particulier d'oléfines choisies parmi les styrènes, les styrènes substitués, le butadiène additionné en 1,4, le butadiène additionné en 1,2, les composés de formule (C1) 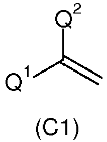 dans laquelle Q¹ et Q² représentent indépendamment un atome d'hydrogène ou un groupement C₁-C₁₈-alkyl.

De manière plus préférée, le polymère à peigne est préparé par copolymérisation
▪ d'un monomère oléfinique de formule (C2) 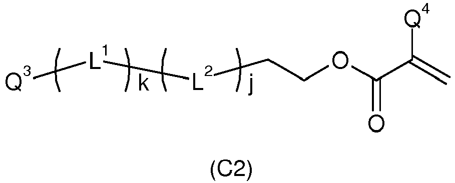 dans laquelle
   ∘ Q³ représente un groupement C₂-C₈-alkyl linéaire ou ramifié ; un groupement C₃-C₈-cycloalkyl ; un groupement C₆-C₁₀-aryl ;
   ∘ Q⁴ représente un atome d'hydrogène ou un groupement méthyle ;
   ∘ L¹ représente un résidu d'addition 1,4 de butadiène ; un résidu d'addition 1,4 de butadiène substitué par au moins un groupement C₁-C₆-alkyl ; un résidu d'addition vinylique de styrène ; un résidu d'addition vinylique de styrène substitué par au moins un groupement C₁-C₆-alkyl ;
   ∘ L² représente un résidu d'addition vinylique de butadiène ; un résidu d'addition vinylique de butadiène substitué par un groupement C₁-C₆-alkyl ; un résidu d'addition vinylique de styrène ; un résidu d'addition vinylique de styrène substitué par au moins un groupement C₁-C₆-alkyl ;
   ∘ k et j représentent indépendamment 0 ou un nombre entier allant de 1 à 3 000 et la somme (k + j) est égale à un nombre entier allant de 7 à 3 000, de préférence allant de 10 à 3 000 ; et
▪ d'un monomère ester alkyl-acrylique ou ester alkyl-methacrylique de formule (C3) 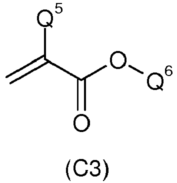 dans laquelle
   ∘ Q⁵ représente un atome d'hydrogène ou un groupement méthyle ;
   ∘ Q⁶ représente C₁-C₂₆-alkyl linéaire ou ramifié.

De manière plus préférée, Q³ représente un groupement phényl ou un groupement butyl linéaire ou ramifié, en particulier un groupement n-butyl.

De manière particulièrement préférée, le polymère à peigne est préparé par copolymérisation
▪ d'un monomère oléfinique de formule (C4) 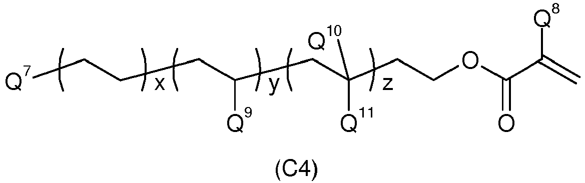 dans laquelle
   ∘ Q⁷ représente un groupement C₁-C₆-alkyl ; un groupement C₆-aryl ;
   ∘ Q⁸ représente un atome d'hydrogène ou un groupement méthyle ;
   ∘ Q⁹, Q¹⁰ et Q¹¹ représentent indépendamment un atome d'hydrogène ou un groupement C₁-C₁₈-alkyl ;
   o x, y et z représentent indépendamment 0 ou un nombre entier allant de 1 à 3 000 et la somme (x + y + z) est égale à un nombre entier allant de 7 à 3 000, de préférence allant de 10 à 3 000 ; et
▪ d'un monomère ester alkyl-acrylique ou ester alkyl-methacrylique de formule (C3) 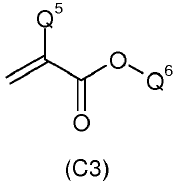 dans laquelle
   ∘ Q⁵ représente un atome d'hydrogène ou un groupement méthyle ;
   ∘ Q⁶ représente C₁-C₂₆-alkyl linéaire ou ramifié.

De manière plus préférée, Q⁷ représente un groupement phényl ou un groupement butyl linéaire ou ramifié, en particulier un groupement n-butyl.

De manière plus particulièrement préférée, le polymère à peigne est préparé par copolymérisation
▪ d'un monomère oléfinique de formule (C5) 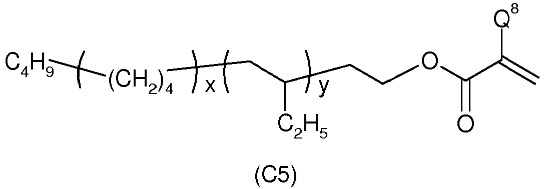 dans laquelle
   ∘ Q⁸ représente un atome d'hydrogène ou un groupement méthyle ;
   o x et y représentent indépendamment 0 ou un nombre entier allant de 1 à 3 000 et la somme (x + y + z) est égale à un nombre entier allant de 7 à 3 000, de préférence allant de 10 à 3 000 ; et
▪ d'un monomère ester alkyl-acrylique ou ester alkyl-methacrylique de formule (C3) 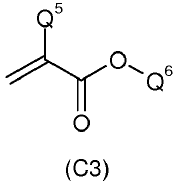 dans laquelle
   ∘ Q⁵ représente un atome d'hydrogène ou un groupement méthyle ;
   ∘ Q⁶ représente C₁-C₂₆-alkyl linéaire ou ramifié.

Un exemple de polymère à peigne est le produit Viscoplex 3-200 (société Evonik).

Au sein de la composition lubrifiante selon l'invention, les quantités respectives (a) de PAO, (b) d'huile de groupe V et (c) de polymère en peigne peuvent varier. De manière préférée, le rapport en poids (a/b) entre l'huile polyalphaoléfinique (PAO) (a) et l'huile de groupe V (b) va de 0,1 à 4, de préférence de 0,3 à 3,6.

La composition lubrifiante selon l'invention possède un VI particulièrement élevé. De manière préférée, le VI de la composition lubrifiante selon l'invention est supérieur à 220. De manière plus préférée, le VI de la composition lubrifiante selon l'invention est supérieur à 250, voire supérieur à 270 ou à 300.

De manière générale, la composition lubrifiante selon l'invention peut comprendre d'autres huiles de base, minérale, synthétique ou naturelle, animale ou végétale, adaptées à son utilisation.

Les huiles de base utilisées dans les compositions lubrifiantes selon l'invention peuvent être des huiles d'origines minérales ou synthétiques appartenant aux groupes I à V selon les classes définies dans la classification API (ou leurs équivalents selon la classification ATIEL) (tableau A) ou leurs mélanges.

**Tableau A**

| | Teneur en saturés | Teneur en soufre | Indice de viscosité (VI) |
|---|---|---|---|
| Groupement I Huiles minérales | < 90 % | > 0,03 % | 80 ≤ VI < 120 |
| Groupement II Huiles hydrocraquées | ≥ 90 % | ≤ 0,03 % | 80 ≤ VI < 120 |
| Groupement III Huiles hydrocraquées ou hydro-isomérisées | ≥ 90 % | ≤ 0,03 % | ≥ 120 |
| Groupement IV | Polyalphaoléfines (PAO) | | |
| Groupement V | Esters et autres bases non incluses dans les groupes I à IV | | |

Les huiles de base minérales selon l'invention incluent tous types de bases obtenues par distillation atmosphérique et sous vide du pétrole brut, suivies d'opérations de raffinage telles qu'extraction au solvant, désasphaltage, déparaffinage au solvant, hydrotraitement, hydrocraquage, hydroisomérisation et hydrofinition.

Des mélanges d'huiles synthétiques et minérales peuvent également être employés.

Il n'existe généralement aucune limitation quant à l'emploi de bases lubrifiantes différentes pour réaliser les compositions lubrifiantes selon l'invention, si ce n'est qu'elles doivent avoir des propriétés, notamment de viscosité, indice de viscosité, teneur en soufre, résistance à l'oxydation, adaptées à une utilisation pour des moteurs ou pour des transmissions de véhicule.

Les huiles de bases des compositions lubrifiantes selon l'invention peuvent également être choisies parmi les huiles synthétiques, telles certains esters d'acides carboxyliques et d'alcools, et parmi les polyalphaoléfines. Les polyalphaoléfines utilisées comme huiles de base sont par exemple obtenues à partir de monomères comprenant de 4 à 32 atomes de carbone, par exemple à partir d'octène ou de décène, et dont la viscosité à 100 °C est comprise entre 1,5 et 15 mm².s⁻¹ selon la norme ASTM D445. Leur masse moléculaire moyenne est généralement comprise entre 250 et 3 000 selon la norme ASTM D5296.

La composition lubrifiante selon l'invention peut comprendre au moins 50 % en masse d'huiles de base par rapport à la masse totale de la composition. De manière plus avantageuse, la composition lubrifiante selon l'invention comprend au moins 60 % en masse, voire au moins 70 % en masse, d'huiles de base par rapport à la masse totale de la composition. De manière plus particulièrement avantageuse, la composition lubrifiante selon l'invention comprend de 75 à 99,9 % en masse d'huiles de base par rapport à la masse totale de la composition.

L'invention fournit également une composition lubrifiante pour moteur de véhicules comprenant au moins une composition lubrifiante selon l'invention, au moins une huile de base et au moins un additif.

De nombreux additifs peuvent être utilisés pour cette composition lubrifiante selon l'invention.

Les additifs préférés pour la composition lubrifiante selon l'invention sont choisis parmi les additifs détergents, les additifs anti-usure, les additifs modificateurs de frottement, les additifs extrême pression, les dispersants, les améliorants du point d'écoulement, les agents anti-mousse, les épaississants et leurs mélanges.

De manière préférée, la composition lubrifiante selon l'invention comprend au moins un additif anti-usure, au moins un additif extrême pression ou leurs mélanges.

Les additifs anti-usure et les additifs extrême pression protègent les surfaces en frottement par formation d'un film protecteur adsorbé sur ces surfaces.

Il existe une grande variété d'additifs anti-usure. De manière préférée pour la composition lubrifiante selon l'invention, les additifs anti-usure sont choisis parmi des additifs phosphosoufrés comme les alkylthiophosphates métalliques, en particulier les alkylthiophosphates de zinc, et plus spécifiquement les dialkyldithiophosphates de zinc ou ZnDTP. Les composés préférés sont de formule Zn((SP(S)(OR)(OR^{'}))₂, dans laquelle R et R^{'}, identiques ou différents, représentent indépendamment un groupement alkyle, préférentiellement un groupement alkyle comportant de 1 à 18 atomes de carbone.

Les phosphates d'amines sont également des additifs anti-usure qui peuvent être employés dans la composition lubrifiante selon l'invention. Toutefois, le phosphore apporté par ces additifs peut agir comme poison des systèmes catalytiques des automobiles car ces additifs sont générateurs de cendres. On peut minimiser ces effets en substituant partiellement les phosphates d'amines par des additifs n'apportant pas de phosphore, tels que, par exemple, les polysulfures, notamment les oléfines soufrées.

De manière avantageuse, la composition lubrifiante selon l'invention peut comprendre de 0,01 à 6 % en masse, préférentiellement de 0,05 à 4 % en masse, plus préférentiellement de 0,1 à 2 % en masse par rapport à la masse totale de composition lubrifiante, d'additifs anti-usure et d'additifs extrême-pression.

De manière avantageuse, la composition lubrifiante selon l'invention peut comprendre au moins un additif modificateur de frottement. L'additif modificateur de frottement peut être choisi parmi un composé apportant des éléments métalliques et un composé exempt de cendres. Parmi les composés apportant des éléments métalliques, on peut citer les complexes de métaux de transition tels que Mo, Sb, Sn, Fe, Cu, Zn dont les ligands peuvent être des composés hydrocarbonés comprenant des atomes d'oxygène, d'azote, de soufre ou de phosphore. Les additifs modificateurs de frottement exempt de cendres sont généralement d'origine organique et peuvent être choisis parmi les monoesters d'acides gras et de polyols, les amines alcoxylées, les amines grasses alcoxylées, les époxydes gras, les époxydes gras de borate; les amines grasses ou les esters de glycérol d'acide gras. Selon l'invention, les composés gras comprennent au moins un groupement hydrocarboné comprenant de 10 à 24 atomes de carbone.

De manière avantageuse, la composition lubrifiante selon l'invention peut comprendre de 0,01 à 2 % en masse ou de 0,01 à 5 % en masse, préférentiellement de 0,1 à 1,5 % en masse ou de 0,1 à 2 % en masse par rapport à la masse totale de la composition lubrifiante, d'additif modificateur de frottement.

De manière avantageuse, la composition lubrifiante selon l'invention peut comprendre au moins un additif antioxydant.

L'additif antioxydant permet généralement de retarder la dégradation de la composition lubrifiante en service. Cette dégradation peut notamment se traduire par la formation de dépôts, par la présence de boues ou par une augmentation de la viscosité de la composition lubrifiante.

Les additifs antioxydants agissent notamment comme inhibiteurs radicalaires ou destructeurs d'hydropéroxydes. Parmi les additifs antioxydants couramment employés, on peut citer les additifs antioxydants de type phénolique, les additifs antioxydants de type aminé, les additifs antioxydants phosphosoufrés. Certains de ces additifs antioxydants, par exemple les additifs antioxydants phosphosoufrés, peuvent être générateurs de cendres. Les additifs antioxydants phénoliques peuvent être exempt de cendres ou bien être sous forme de sels métalliques neutres ou basiques. Les additifs antioxydants peuvent notamment être choisis parmi les phénols stériquement encombrés, les esters de phénol stériquement encombrés et les phénols stériquement encombrés comprenant un pont thioéther, les diphénylamines, les diphénylamines substituées par au moins un groupement alkyle en C₁-C₁₂, les N,N'-dialkyle-aryle-diamines et leurs mélanges.

De préférence selon l'invention, les phénols stériquement encombrés sont choisis parmi les composés comprenant un groupement phénol dont au moins un carbone vicinal du carbone portant la fonction alcool est substitué par au moins un groupement alkyle en C₁-C₁₀, de préférence un groupement alkyle en C₁-C₆, de préférence un groupement alkyle en C₄, de préférence par le groupement ter-butyle.

Les composés aminés sont une autre classe d'additifs antioxydants pouvant être utilisés, éventuellement en combinaison avec les additifs antioxydants phénoliques. Des exemples de composés aminés sont les amines aromatiques, par exemple les amines aromatiques de formule NR^{a}R^{b}R^{c} dans laquelle R^{a} représente un groupement aliphatique ou un groupement aromatique, éventuellement substitué, R^{b} représente un groupement aromatique, éventuellement substitué, R^{c} représente un atome d'hydrogène, un groupement alkyle, un groupement aryle ou un groupement de formule R^{d}S(O)_{z}R^{e} dans laquelle R^{d} représente un groupement alkylène ou un groupement alkenylène, R^{e} représente un groupement alkyle, un groupement alcényle ou un groupement aryle et z représente 0, 1 ou 2.

Des alkyl phénols sulfurisés ou leurs sels de métaux alcalins et alcalino-terreux peuvent également être utilisés comme additifs antioxydants.

Une autre classe d'additifs antioxydants est celle des composés cuivrés, par exemples les thio- ou dithio-phosphates de cuivre, les sels de cuivre et d'acides carboxyliques, les dithiocarbamates, les sulphonates, les phénates, les acétylacétonates de cuivre. Les sels de cuivre I et II, les sels d'acide ou d'anhydride succiniques peuvent également être utilisés.

La composition lubrifiante selon l'invention peut contenir tous types d'additifs antioxydants connus de l'homme du métier.

De manière avantageuse, la composition lubrifiante comprend au moins un additif antioxydant exempt de cendres.

De manière également avantageuse, la composition lubrifiante selon l'invention comprend de 0,1 à 2 % en poids par rapport à la masse totale de la composition, d'au moins un additif antioxydant.

La composition lubrifiante selon l'invention peut également comprendre au moins un additif détergent.

Les additifs détergents permettent généralement de réduire la formation de dépôts à la surface des pièces métalliques par dissolution des produits secondaires d'oxydation et de combustion.

Les additifs détergents utilisables dans la composition lubrifiante selon l'invention sont généralement connus de l'homme de métier. Les additifs détergents peuvent être des composés anioniques comprenant une longue chaîne hydrocarbonée lipophile et une tête hydrophile. Le cation associé peut être un cation métallique d'un métal alcalin ou alcalino-terreux.

Les additifs détergents sont préférentiellement choisis parmi les sels de métaux alcalins ou de métaux alcalino-terreux d'acides carboxyliques, les sulfonates, les salicylates, les naphténates, ainsi que les sels de phénates. Les métaux alcalins et alcalino-terreux sont préférentiellement le calcium, le magnésium, le sodium ou le baryum.

Ces sels métalliques comprennent généralement le métal en quantité stoechiométrique ou bien en excès, donc en quantité supérieure à la quantité stoechiométrique. Il s'agit alors d'additifs détergents surbasés ; le métal en excès apportant le caractère surbasé à l'additif détergent est alors généralement sous la forme d'un sel métallique insoluble dans l'huile, par exemple un carbonate, un hydroxyde, un oxalate, un acétate, un glutamate, préférentiellement un carbonate.

De manière avantageuse, la composition lubrifiante selon l'invention peut comprendre de 0,5 à 8 % ou de 2 à 4 % en poids d'additif détergent par rapport à la masse totale de la composition lubrifiante.

De manière également avantageuse, la composition lubrifiante selon l'invention peut également comprendre au moins un additif abaisseur de point d'écoulement.

En ralentissant la formation de cristaux de paraffine, les additifs abaisseurs de point d'écoulement améliorent généralement le comportement à froid de la composition lubrifiante selon l'invention.

Comme exemple d'additifs abaisseurs de point d'écoulement, on peut citer les polyméthacrylates d'alkyle, les polyacrylates, les polyarylamides, les polyalkylphénols, les polyalkylnaphtalènes, les polystyrènes alkylés.

De manière avantageuse, la composition lubrifiante selon l'invention peut également comprendre au moins un agent dispersant.

L'agent dispersant peut être choisis parmi les bases de Mannich, les succinimides et leurs dérivés.

De manière également avantageuse, la composition lubrifiante selon l'invention peut comprendre de 0,2 à 10 % en masse d'agent dispersant par rapport à la masse totale de la composition lubrifiante.

De manière avantageuse, la composition lubrifiante peut également comprendre au moins un polymère supplémentaire améliorant l'indice de viscosité. Comme exemples de polymère supplémentaire améliorant l'indice de viscosité, on peut citer les esters polymères, les homopolymères ou les copolymères, hydrogénés ou non- hydrogénés, du styrène, du butadiène et de l'isoprène, les polyméthacrylates (PMA). De manière également avantageuse, la composition lubrifiante selon l'invention peut comprendre de 1 à 15 % en masse par rapport à la masse totale de la composition lubrifiante de polymère améliorant l'indice de viscosité.

Outre une composition lubrifiante, l'invention concerne également l'utilisation de cette composition lubrifiante. En particulier, l'invention concerne l'utilisation d'une composition lubrifiante selon l'invention pour la lubrification d'un moteur de véhicule, en particulier 14 pour la lubrification d'un moteur d'un véhicule hybride.

De manière préférée, l'utilisation d'une composition lubrifiante selon l'invention permet d'améliorer la lubrification d'un moteur de véhicule. De manière particulièrement préférée, l'utilisation d'une composition lubrifiante selon l'invention permet d'améliorer la lubrification d'un moteur de véhicule lors d'un cycle urbain défini selon le cycle européen NEDC ou lors d'un cycle urbain défini selon le cycle européen WLTP ou encore lors d'un cycle à froid défini selon le cycle européen ECE.

L'invention concerne également l'utilisation d'une composition lubrifiante selon l'invention pour améliorer le Fuel Eco (FE) d'un lubrifiant.

L'invention concerne également l'utilisation d'une composition lubrifiante selon l'invention pour réduire la consommation de carburant d'un moteur, en particulier d'un moteur de véhicule, notamment d'un moteur d'un véhicule hybride.

Selon l'invention, les caractéristiques particulières, avantageuses ou préférées de la composition lubrifiante selon l'invention, permettent de définir des utilisations selon l'invention qui sont également particulières, avantageuses ou préférées.

Les différents aspects de l'invention peuvent être illustrés par les exemples qui suivent.

### Exemple 1 : préparation de compositions lubrifiantes selon l'invention

On mélange les différentes composantes des compositions lubrifiantes selon l'invention en fonction de la nature et des quantités de produits présentées dans le tableau 1.

**Tableau 1**

| | Compositions lubrifiantes selon l'invention (% en poids) | | | |
|---|---|---|---|---|
| | CL1 | CL2 | CL3 | CL4 |
| PAO - (Durasyn 164 Ineos) | 64,2 | 44,2 | 24,2 | 44,2 |
| Huile Groupe V - Monoester (Priolube 1414 Croda) | 20 | 40 | 60 | 0 |
| Huile Groupe V - PAG de formule (B2) avec R³ = C₁₂H₂₅, m = 2,45 et n = 1,97 | 0 | 0 | 0 | 40 |
| Polymère en peigne - Polymethacrylate en peigne (Viscoplex 3-200 Evonik) | 6,2 | 6,2 | 6,2 | 6,2 |
| Paquet d'additifs - sulfonates de Ca, agents antioxydants de type diphénylamine alkylée et phénols encombrés, ZnDTP secondaire, dispersant de type bisuccinimide | 8,6 | 8,6 | 8,6 | 8,6 |
| Agent anti-frottement MoDTC (Sakuralube 525 Adeka) | 1,0 | 1,0 | 1,0 | 1,0 |

Les caractéristiques de ces compositions lubrifiantes selon l'invention sont présentées dans le tableau 2.

**Tableau 2**

| | Composition lubrifiante | | | |
|---|---|---|---|---|
| | CL1 | CL2 | CL3 | CL4 |
| Grade SAEJ300 | 0W12 | 0W12 | 0W12 | 0W16 |
| KV 130 calculé (mm².s⁻¹) | 4,62 | 4,32 | 4,63 | 4,79 |
| KV100 - ISO 3104 (mm².s⁻¹) | 6,950 | 6, 43 | 6,995 | 7,191 |
| KV40 - ISO3104 (mm².s⁻¹) | 23,31 | 20,92 | 23,79 | 24,45 |
| VI - ISO2909 | 284 | 296 | 283 | 287 |
| HTHS à 150 °C - CEC L-036 (mPa.s) | 2,24 | 2,17 | 2,15 | 2,83 |
| CCS à -35 °C - ASTM D5293 (mPa.s) | / | 839 | / | 1 415 |

### Exemple 2 : préparation de compositions lubrifiantes comparatives

On mélange les différentes composantes des compositions lubrifiantes comparatives en fonction de la nature et des quantités de produits présentées dans le tableau 3.

**Tableau 3**

| | Composition comparative (% en poids) | |
|---|---|---|
| | CC1 | CC2 |
| PAO - (Durasyn 164 Ineos) | 44,2 | 84,2 |
| Huile Groupe V - Monoester (Priolube 1414 Croda) | 40 | 0 |
| Polymère - Polymethacrylate linéaire (Viscoplex 6-054 Evonik) | 6,2 | 0 |
| Polymère en peigne - Polymethacrylate en peigne (Viscoplex 3-200 Evonik) | 0 | 6,2 |
| Paquet d'additifs - sulfonates de Ca, agents antioxydants de type diphénylamine alkylée et phénols encombrés, ZnDTP secondaire, dispersant de type bisuccinimide | 8,6 | 8,6 |
| Agent anti-frottement MoDTC (Sakuralube 525 Adeka) | 1,0 | 1,0 |

La première composition lubrifiante comparative (CC1) ne comprend pas de polymethacrylate en peigne mais un polymethacrylate linéaire. La deuxième composition lubrifiante comparative (CC2) ne comprend pas d'huile de groupe V mais uniquement de l'huile de groupe IV. Les caractéristiques de ces compositions lubrifiantes comparatives sont présentées dans le tableau 4.

**Tableau 4**

| | Composition lubrifiante comparative | |
|---|---|---|
| | CC1 | CC2 |
| Grade SAEJ300 | 0W12 | 0W16 |
| KV 130 calculé (mm².s⁻¹) | 3,84 | 4,03 |
| KV100 - ISO 3104 (mm².s⁻¹) | 5,970 | 6,358 |
| KV40 - ISO3104 (mm².s⁻¹) | 23,08 | 26,19 |
| VI - ISO2909 | 225 | 210 |
| HTHS à 150 °C - CEC L-036 (mPa.s) | 2,14 | 2,30 |
| CCS à -35 °C - ASTM D5293 (mPa.s) | 968 | 2 268 |

### Exemple 3: évaluation des performances en économie de carburant des compositions lubrifiantes selon l'invention (CL2 et CL4) et de la composition lubrifiante comparative (CC1)

Au cours de plusieurs essais selon les conditions décrites dans les exemples de WO 2012-025901, la consommation de carburant lors de la lubrification au moyen de la composition lubrifiante selon l'invention est comparée à la consommation de carburant lors de l'utilisation d'une composition lubrifiante de référence (huile de base et paquet d'additifs similaire au paquet d'additifs de la composition selon l'invention - grade SAEJ300 5W30). Les gains de consommation de carburant sont évalués en prenant comme référence les consommations de carburant résultant de l'utilisation de cette composition lubrifiante de référence. Les résultats obtenus sont présentés dans le tableau 5.

**Tableau 5**

| | Gain obtenu grâce à la composition lubrifiante (%) | | |
|---|---|---|---|
| | CL2 | CL4 | CC1 |
| Cycle NEDC complet | 4,89 | 4,01 | 4,73 |
| Cycle NEDC phase ECE à froid | 12,84 | 10,34 | 11,11 |
| Cycle NEDC phase cycle urbain mixte | 7,48 | 5,58 | 6,03 |

On constate que les compositions lubrifiantes CL2 et CL4 selon l'invention permettent des gains de consommation de carburant très importants. Ainsi, la composition lubrifiante selon l'invention CL2 permet des gains supérieurs à ceux obtenus avec la composition lubrifiante comparative CC1 qui ne comprend pas de polymethacrylate en peigne. Par ailleurs, la composition lubrifiante selon l'invention CL4 comprenant une huile de groupe V de type PAG permet également des gains importants.

On constate plus particulièrement que ces compositions lubrifiantes selon l'invention permettent des gains très significatifs d'économie de carburant sur cycle moteur à basse température et à faible régime moteur, ce qui démontre l'intérêt de ces compositions lubrifiantes selon l'invention pour obtenir des économies de carburant encore plus importantes en conditions urbaines.

### Exemple 4: évaluation des performances de coefficient de traction des compositions lubrifiantes selon l'invention (CL1, CL2 et CL3) et d'une composition lubrifiante comparative (CC2)

Le coefficient de traction des compositions lubrifiantes est évalué et les résultats obtenus sont présentés dans le tableau 6.

**Tableau 6**

| | Composition lubrifiante | | | |
|---|---|---|---|---|
| | CL1 | CL2 | CL3 | CC2 |
| coefficient de traction (MTM: T= 40 °C, Vₑ= 1 m.⁻¹, SRR= 20 % charge= 25 N) | 0,019 | 0,018 | 0,016 | 0,023 |

Les compositions lubrifiantes selon l'invention possèdent donc de très bons coefficients de traction. Ces résultats confirment que les compositions lubrifiantes selon l'invention permettent de réduire le coefficient de frottement, et donc d'améliorer le gain d'économie de carburant par rapport à une composition lubrifiante comparative comprenant une PAO et un polymère en peigne selon l'invention mais ne comprenant pas d'huile de groupe V selon l'invention, et ceci avec différentes teneurs en huile de groupe V.

### Exemple 5: évaluation des performances de propreté moteur des compositions lubrifiantes selon l'invention (CL1, CL2, CL3 et CL4) et d'une composition lubrifiante comparative (CC2)

Les propriétés de propreté moteur sont évaluées par le test TEOST MHT selon la norme ASTM D7097 et les résultats obtenus sont présentés dans le tableau 7 et exprimés en milligrammes. La valeur maximale acceptable, notamment pour la plupart des constructeurs automobiles, est égale à 35 mg suivant la classification ILSAC pour une huile de grade 0Wxx.

**Tableau 7**

| | Composition lubrifiante | | | | |
|---|---|---|---|---|---|
| | CL1 | CL2 | CL3 | CL4 | CC2 |
| dépôt sur tige Teost MHT - ASTM D7097 (mg) | 12,2 | 11,9 | 22,7 | 10,7 | 7,6 |

Les compositions lubrifiantes selon l'invention permettent donc de conserver une bonne propreté moteur, voire d'améliorer la propreté moteur et sont conformes aux limites fixées par l'industrie automobile. Il est à noter que ces bons résultats en propreté moteur sont obtenus avec différentes teneurs en huile de groupe V selon l'invention.

## Revendications

1. Composition lubrifiante de grade selon la classification SAEJ300 défini par la formule (I)
(X) W (Y) (I)
dans laquelle
▪ X représente 0 ou 5 ;
▪ Y représente un nombre entier allant de 4 à 20 ; et
comprenant
(a) au moins une huile polyalphaoléfinique (PAO) dont la viscosité cinématique mesurée à 100 °C selon la norme ASTM D445 va de 1,5 à 8 mm².s⁻¹ ;
(b) de 10 à 80 % en poids de la composition d'au moins une huile de groupe V dont la viscosité cinématique mesurée à 100 °C selon la norme ASTM D445 va de 1,5 à 8 mm².s⁻¹ choisi parmi
▪ un monoester de formule (B1) ; 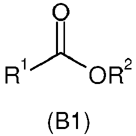 dans laquelle
o R¹ représente un groupement hydrocarboné, saturé ou insaturé, linéaire ou ramifié, comprenant de 14 à 24 atomes de carbone ;
o R² représente un groupement hydrocarboné, saturé ou insaturé, linéaire ou ramifié, comprenant de 2 à 18 atomes de carbone ;
▪ un polyalkylene-glycol (PAG) de formule (B2) 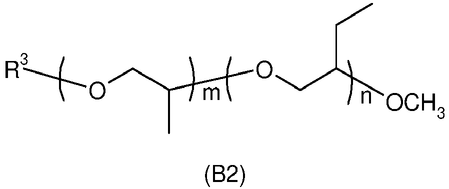 dans laquelle
o R3 représente un groupement C1-C30-alkyl linéaire ou ramifié ;
m et n représentent indépendamment un nombre moyen allant de 1 à 5;
(c) au moins un polymère en peigne dont les chaînes pendantes comprennent au moins 50 atomes de carbone et choisi parmi les copolymères d'au moins une polyoléfine et d'au moins un poly(alkyl)methacrylate ; les copolymères d'au moins une polyoléfine et d'au moins un poly(alkyl)acrylate.

2. Composition lubrifiante selon la revendication 1 de grade selon la classification SAEJ300 choisi parmi 0W4, 0W8, 0W12, 0W16, 0W20, 5W4, 5W8, 5W12, 5W16, 5W20.

3. Composition lubrifiante selon l'une des revendications 1 ou 2 dont la viscosité cinématique mesurée à 40 °C selon la norme ASTM D445 va de 12 à 30 mm².s⁻¹, de préférence de 14 à 25 mm².s⁻¹.

4. Composition lubrifiante selon l'une des revendications 1 à 3
▪ pour laquelle la viscosité cinématique de la PAO, mesurée à 100 °C selon la norme ASTM D445, va de 1,5 à 6 mm².s⁻¹ ou de 2 à 8 mm².s⁻¹ ou encore de 2 à 6 mm².s⁻¹ ; ou
▪ pour laquelle la masse moléculaire moyenne en poids de la PAO est inférieure à 500 Da ou va de 50 à 500 Da ou va de 50 à 350 Da ou de 50 à 300 Da.

5. Composition lubrifiante selon l'une des revendications 1 à 4 comprenant de 20 à 80 %, de 30 à 60 % ou de 35 à 45 % en poids de la composition d'huile de groupe V.

6. Composition lubrifiante selon l'une des revendications 1 à 5 pour laquelle le polymère à peigne dont les chaînes pendantes sont obtenues par polymérisation ou par copolymérisation d'oléfines, de préférence d'oléfines comprenant de 8 à 17 atomes de carbone et choisies parmi les styrènes, les styrènes substitués, le butadiène additionné en 1,4, le butadiène additionné en 1,2, les composés de formule (C1) 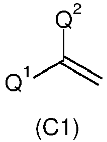 dans laquelle Q¹ et Q² représentent indépendamment un atome d'hydrogène ou un groupement C₁-C₁₈-alkyl.

7. Composition lubrifiante selon l'une des revendications 1 à 6 pour laquelle le polymère à peigne est préparé par copolymérisation
▪ d'un monomère oléfinique de formule (C2) 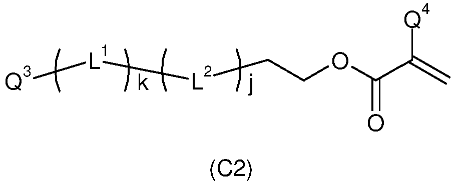 dans laquelle
o Q³ représente un groupement C₂-C₈-alkyl linéaire ou ramifié ; un groupement C₃-C₈-cycloalkyl ; un groupement C₆-C₁₀-aryl ;
o Q⁴ représente un atome d'hydrogène ou un groupement méthyle ;
o L¹ représente un résidu d'addition 1,4 de butadiène ; un résidu d'addition 1,4 de butadiène substitué par au moins un groupement C₁-C₆-alkyl ; un résidu d'addition vinylique de styrène ; un résidu d'addition vinylique de styrène substitué par au moins un groupement C₁-C₆-alkyl ;
o L² représente un résidu d'addition vinylique de butadiène ; un résidu d'addition vinylique de butadiène substitué par un groupement C₁-C₆-alkyl ; un résidu d'addition vinylique de styrène ; un résidu d'addition vinylique de styrène substitué par au moins un groupement C₁-C₆-alkyl ;
o k et j représentent indépendamment 0 ou un nombre entier allant de 1 à 3 000 et la somme (k + j) est égale à un nombre entier allant de 7 à 3 000, de préférence allant de 10 à 3 000 ; et
▪ d'un monomère ester alkyl-acrylique ou ester alkyl-methacrylique de formule (C3) 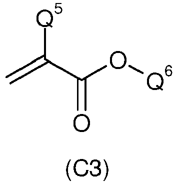 dans laquelle
o Q⁵ représente un atome d'hydrogène ou un groupement méthyle ;
∘ Q⁶ représente C₁-C₂₆-alkyl linéaire ou ramifié.

8. Composition lubrifiante selon l'une des revendications 1 à 7 pour laquelle le polymère à peigne est préparé par copolymérisation
▪ d'un monomère oléfinique de formule (C4) 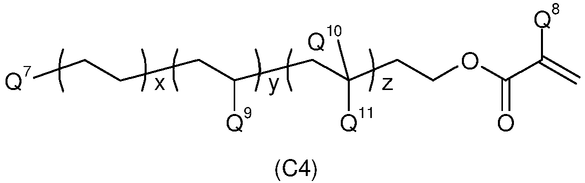 dans laquelle
o Q⁷ représente un groupement C₁-C₆-alkyl ; un groupement C₆-aryl ;
o Q⁸ représente un atome d'hydrogène ou un groupement méthyle ;
o Q⁹, Q¹⁰ et Q¹¹ représentent indépendamment un atome d'hydrogène ou un groupement C₁-C₁₈-alkyl ;
o x, y et z représentent indépendamment 0 ou un nombre entier allant de 1 à 3 000 et la somme (x + y + z) est égale à un nombre entier allant de 7 à 3 000, de préférence allant de 10 à 3 000 ; et
▪ d'un monomère ester alkyl-acrylique ou ester alkyl-methacrylique de formule (C3) 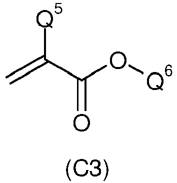 dans laquelle
o Q⁵ représente un atome d'hydrogène ou un groupement méthyle ;
∘ Q⁶ représente C₁-C₂₆-alkyl linéaire ou ramifié.

9. Composition lubrifiante selon l'une des revendications 1 à 8 dont le rapport en poids (a/b) entre l'huile polyalphaoléfinique (PAO) (a) et l'huile de groupe V (b) va de 0,1 à 4, de préférence de 0,3 à 3,6.

10. Composition lubrifiante selon l'une des revendications 1 à 9 dont le VI est supérieur à 220, de préférence supérieur à 250, voire supérieur à 270 ou à 300.

11. Utilisation d'une composition lubrifiante selon l'une des revendications 1 à 10 pour la lubrification d'un moteur de véhicule ou pour améliorer la lubrification d'un moteur de véhicule
▪ lors d'un cycle urbain défini selon le cycle européen NEDC ; ou
▪ lors d'un cycle urbain défini selon le cycle européen WLTP ; ou
▪ lors d'un cycle à froid défini selon le cycle européen ECE.

12. Utilisation selon la revendication 11 pour la lubrification d'un moteur d'un véhicule hybride.

13. Utilisation d'une composition lubrifiante selon l'une des revendications 1 à 10 pour améliorer le Fuel Eco (FE) d'un lubrifiant ou pour réduire la consommation de carburant d'un moteur, en particulier d'un moteur de véhicule, notamment d'un moteur d'un véhicule hybride.

## Patentansprüche

1. Schmiermittelzusammensetzung einer Klasse gemäß der Klassifikation SAEJ300, definiert durch die Formel (I) 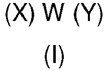 wobei
▪ X 0 oder 5 darstellt;
▪ Y eine ganze Zahl von 4 bis 20 darstellt; und
umfassend
(a) mindestens ein Polyalphaolefinöl (PAO), dessen kinematische Viskosität, gemessen bei 100 °C nach ASTM D445, von 1,5 bis 8 mm².s⁻¹ ist;
(b) von 10 bis 80 Gewichts-% der Zusammensetzung mindestens eines Öls der Gruppe V, dessen kinematische Viskosität, gemessen bei 100 °C gemäß ASTM D445, von 1,5 bis 8 mm².s⁻¹ ist, ausgewählt aus
▪ einem Monoester von Formel (B1); 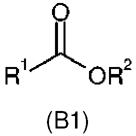 wobei
∘ R¹ eine gesättigte oder ungesättigte, geradkettige oder verzweigte Kohlenwasserstoffgruppierung, umfassend 14 bis 24 Kohlenstoffatome, darstellt;
∘ R² eine gesättigte oder ungesättigte, geradkettige oder verzweigte Kohlenwasserstoffgruppierung, umfassend 2 bis 18 Kohlenstoffatome, darstellt;
▪ einem Polyalkylenglycol (PAG) von Formel (B2) 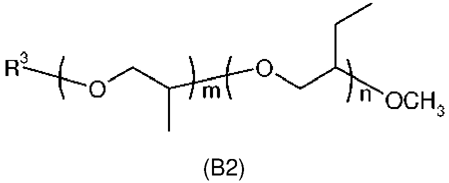 wobei
∘ R3 eine lineare oder verzweigte C1-C30-Alkylgruppierung darstellt; m und n unabhängig eine Durchschnittszahl von 1 bis 5 darstellen;
(c) mindestens ein Kammpolymer, dessen seitenständige Ketten mindestens 50 Kohlenstoffatome umfassen und das ausgewählt ist aus Copolymeren von mindestens einem Polyolefin und mindestens einem Poly(alkyl)methacrylat; Copolymeren von mindestens einem Polyolefin und mindestens einem Poly(alkyl)acrylat.

2. Schmiermittelzusammensetzung nach Anspruch 1 einer Klasse gemäß der Klassifikation SAEJ300, ausgewählt aus 0W4, 0W8, 0W12, 0W16, 0W20, 5W4, 5W8, 5W12, 5W16, 5W20.

3. Schmiermittelzusammensetzung nach einem der Ansprüche 1 oder 2, dessen kinematische Viskosität, gemessen bei 40 °C nach ASTM D445, von 12 bis 30 mm².s⁻¹, vorzugsweise 14 bis 25 mm².s⁻¹ ist.

4. Schmiermittelzusammensetzung nach einem der Ansprüche 1 bis 3,
▪ wobei die kinematische Viskosität des PAO, gemessen bei 100 °C nach ASTM D445, im Bereich von 1,5 bis 6 mm².s⁻¹ oder von 2 bis 8 mm².s⁻¹ oder aber von 2 bis 6 mm².s⁻¹ ist; oder
▪ wobei das gewichtsmittlere Molekulargewicht des PAO weniger als 500 Da ist oder von 50 bis 500 Da reicht oder von 50 bis 350 Da reicht oder von 50 bis 300 Da reicht.

5. Schmiermittelzusammensetzung nach einem der Ansprüche 1 bis 4, umfassend 20 bis 80 Gewichts-%, 30 bis 60 Gewichts-% oder 35 bis 45 Gewichts-% der Ölzusammensetzung der Gruppe V.

6. Schmiermittelzusammensetzung nach einem der Ansprüche 1 bis 5, wobei das Kammpolymer, dessen Seitenketten durch Polymerisation oder Copolymerisation von Olefinen erlangt werden, vorzugsweise von Olefinen, umfassend 8 bis 17 Kohlenstoffatome und ausgewählt aus Styrolen, substituierten Styrolen, 1,4-addiertem Butadien, 1,2-addiertem Butadien, Verbindungen von Formel (C1) 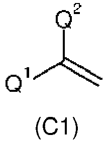 wobei Q¹ und Q² unabhängig ein Wasserstoffatom oder eine C₁-C₁₈-Alkylgruppierung darstellen.

7. Schmiermittelzusammensetzung nach einem der Ansprüche 1 bis 6, wobei das Kammpolymer hergestellt wird durch Copolymerisation
▪ eines Olefinmonomers von Formel (C2) 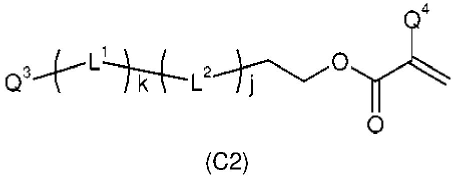 wobei
o Q³ eine geradkettige oder verzweigte C₂-C₈-Alkylgruppierung; eine C₃-C₈-Cycloalkylgruppierung; eine C₆-C₁₀-Arylgruppierung darstellt;
o Q⁴ ein Wasserstoffatom oder eine Methylgruppierung darstellt;
o L¹ einen Butadien-1,4-Additionsrest; einen Butadien-1,4-Additionsrest, der mit mindestens einer C₁-C₆-Alkylgruppierung substituiert ist; einen Styrol-Vinyladditionsrest; einen Styrol-Vinyladditionsrest, der mit mindestens einer C₁-C₆-Alkylgruppierung substituiert ist, darstellt;
o L² einen Vinyladditionsrest; einen Vinyladditionsrest, der mit einer C₁-C₆-Alkylgruppierung substituiert ist; einen Styrol-Vinyladditionsrest; einen Styrol-Vinyladditionsrest, der mit mindestens einer C₁-C₆-Alkylgruppierung substituiert ist, darstellt;
o k und j unabhängig 0 oder eine ganze Zahl von 1 bis 3000 darstellen und die Summe (k + j) gleich wie eine ganze Zahl von 7 bis 3000, vorzugsweise von 10 bis 3000, ist; und
▪ eines Alkylacrylsäureester- oder Alkylmethacrylsäureestermonomers von Formel (C3) 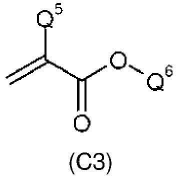 wobei
o Q⁵ ein Wasserstoffatom oder eine Methylgruppierung darstellt;
o Q⁶ ein geradkettiges oder verzweigtes C₁-C₂₆-Alkyl darstellt.

8. Schmiermittelzusammensetzung nach einem der Ansprüche 1 bis 7, wobei das Kammpolymer hergestellt wird durch Copolymerisation
▪ eines Olefinmonomers von Formel (C4) 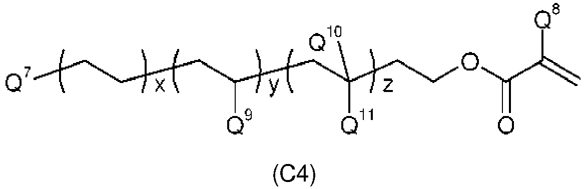 wobei
o Q⁷ eine C₁-C₆-Alkylgruppierung; eine C₆-Arylgruppierung darstellt;
o Q⁸ ein Wasserstoffatom oder eine Methylgruppierung darstellt;
o Q⁹, Q¹⁰ und Q¹¹ unabhängig ein Wasserstoffatom oder eine C₁-C₁₈-Alkylgruppierung darstellen;
o x, y und z unabhängig 0 oder eine ganze Zahl von 1 bis 3000 darstellen und die Summe (x + y + z) gleich wie eine ganze Zahl von 7 bis 3000, vorzugsweise von 10 bis 3000, ist; und
▪ eines Alkylacrylsäureester- oder Alkylmethacrylsäureestermonomers von Formel (C3) 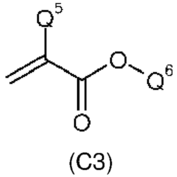 wobei
o Q⁵ ein Wasserstoffatom oder eine Methylgruppierung darstellt;
o Q⁶ ein geradkettiges oder verzweigtes C₁-C₂₆-Alkyl darstellt.

9. Schmiermittelzusammensetzung nach einem der Ansprüche 1 bis 8, deren Gewichtsverhältnis (a/b) zwischen Polyalphaolefinöl (PAO) (a) und Öl der Gruppe V (b) 0,1 bis 4, vorzugsweise 0,3 bis 3,6, ist.

10. Schmiermittelzusammensetzung nach einem der Ansprüche 1 bis 9, deren VI größer ist als 220, vorzugsweise größer als 250, sogar größer als 270 oder 300.

11. Verwendung einer Schmiermittelzusammensetzung nach einem der Ansprüche 1 bis 10 zur Schmierung eines Fahrzeugmotors oder zum Verbessern der Schmierung eines Fahrzeugmotors
▪ bei einem nach dem europäischen NEFZ-Zyklus definierten Stadtzyklus; oder
▪ bei einem nach dem europäischen WLTP-Zyklus definierten Stadtzyklus; oder
▪ bei einem nach dem europäischen ECE-Zyklus definierten Kaltzyklus.

12. Verwendung nach Anspruch 11 zur Schmierung eines Motors eines Hybridfahrzeugs.

13. Verwendung einer Schmiermittelzusammensetzung nach einem der Ansprüche 1 bis 10 zum Verbessern des Fuel Eco (FE) eines Schmiermittels oder zum Verringern des Kraftstoffverbrauchs eines Motors, insbesondere eines Fahrzeugmotors, insbesondere eines Motors eines Hybridfahrzeugs.

## Claims

1. A lubricant composition of a grade according to the SAEJ300 classification defined by the formula (I)
(X)W(Y) (I)
wherein
▪ X represents 0 or 5;
▪ Y represents an integer ranging from 4 to 20; and
comprising
(a) at least one polyalphaolefinic oil (PAO) for which the cinematic viscosity measured at 100 C according to the ASTM D445 standard ranges from 1.5 to 8 mm².s⁻¹;
(b) from 10 to 80% by weight of the composition of at least one oil of group V for which the cinematic viscosity measured at 100 °C according to the ASTM D445 standard ranges from 1.5 to 8 mm².s⁻¹ selected from among:
▪ a monoester of formula (B1); 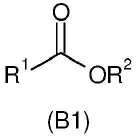 wherein
o R¹ represents a linear or branched, saturated or unsaturated hydrocarbon group, comprising from 14 to 24 carbon atoms;
o R² represents a linear or branched, saturated or unsaturated hydrocarbon group, comprising from 2 to 18 carbon atoms;
▪ a polyalkylene-glycol (PAG) of formula (B2) 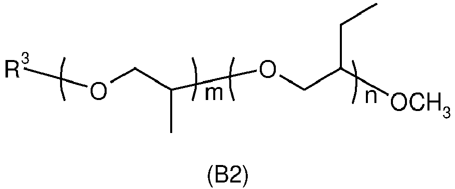 wherein
o R3 represents a linear or branched C1-C30-alkyl group;
o m and n represent independently an average number ranging from 1 to 5;
(c) at least one comb polymer for which the three pendant chains comprise at least 50 carbon atoms and selected from among the copolymers of at least one polyolefin and of at least one poly(alkyl)methacrylate; the copolymers of at least one polyolefin and of at least one poly(alkyl)acrylate.

2. The lubricant composition according to claim 1 of a grade according to the SAEJ300 classification selected from among 0W4, 0W8, 0W12, 0W16, 0W20, 5W4, 5W8, 5W12, 5W16, 5W20.

3. The lubricant composition according to one of claims 1 or 2, for which the cinematic viscosity measured at 40 °C according to the ASTM D445 standard ranges from 12 to 30 mm².s⁻¹, preferably from 14 to 25 mm².s⁻¹.

4. The lubricant composition according to one of claims 1 to 3
▪ for which the cinematic viscosity of the PAO, measured at 100 °C according to the ASTM D445 standard, ranges from 1.5 to 6 mm².s⁻¹ or from 2 to 8 mm².s⁻¹ or further from 2 to 6 mm².s⁻¹; or
▪ for which the average molecular mass by weight of the PAO is less than 500 Da or ranges from 50 to 500 Da or ranges from 50 to 350 Da or from 50 to 300 Da.

5. The lubricant composition according to one of claims 1 to 4 comprising from 20 to 80%, from 30 to 60% or from 35 to 45% by weight of the oil composition of group V.

6. The lubricant composition according to one of claims 1 to 8, for which the comb polymer for which the pendant chains are obtained by polymerization or by copolymerization of olefins, preferably of olefins comprising from 8 to 17 carbon atoms and selected from among styrenes, substituted styrenes, butadiene added in 1,4, the butadiene added in 1,2, the compounds of formula (C1) 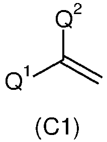 wherein Q¹ and Q² represent independently a hydrogen atom or a C₁-C₁₈-alkyl group.

7. The lubricant composition according to one of claims 1 to 9, for which the comb polymer is prepared by copolymerization
▪ of an olefinic monomer of formula (C2) 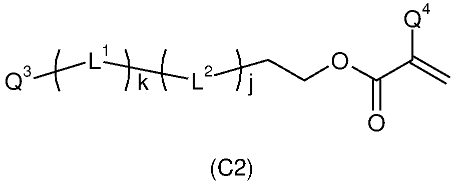 wherein
o Q³ represents a linear or branched C₂-C₈-alkyl group; a C₃-C₈-cycloalkyl group; a C₆-C₁₀-aryl group;
o Q⁴ represents a hydrogen atom or a methyl group;
o L¹ represents a residue of 1,4 addition of butadiene; a residue of 1,4 addition of butadiene substituted with at least one C₁-C₆-alkyl group; a residue of vinyl addition of styrene; a residue of vinyl addition of styrene substituted with at least one C₁-C₆-alkyl group;
o L² represents a residue of vinyl addition of butadiene; a residue of vinyl addition of butadiene substituted with a C₁-C₆-alkyl group; a residue of vinyl addition of styrene; a residue of vinyl addition of styrene substituted with at least one C₁-C₆-alkyl group;
o k and j represent independently 0 or an integer ranging from 1 to 3,000 and the sum (k + j) is equal to an integer ranging from 7 to 3,000, preferably ranging from 10 to 3,000; and
▪ of an alkyl-acrylic ester monomer or alkyl-methacrylic ester of formula (C3) 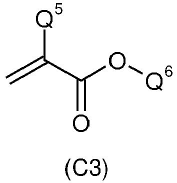 wherein
o Q⁵ represents a hydrogen atom or a methyl group ;
∘ Q⁶ represents a linear or branched C₁-C₂₆-alkyl group.

8. The lubricant composition according to one of claims 1 to 7 for which the comb polymer is prepared by copolymerization
▪ of an olefinic monomer of formula (C4) 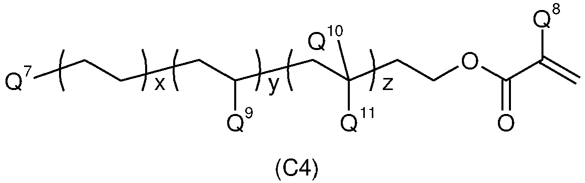 wherein
∘ Q⁷ represents a C₁-C₆-alkyl group; a C₆-aryl group;
∘ Q⁸ represents a hydrogen atom or a methyl group;
o Q⁹, Q¹⁰ and Q¹¹ represent independently a hydrogen atom or a C₁-C₁₈-alkyl group;
o x, y and z represent independently 0 or an integer ranging from 1 to 3,000 and the sum (x + y + z) is equal to an integer ranging from 7 to 3,000, preferably ranging from 10 to 3,000; and
▪ of a alkyl-acrylic ester monomer or methacrylic-alkyl ester of formula (C3) 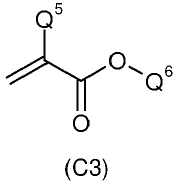 wherein
o Q⁵ represents a hydrogen atom or a methyl group;
o Q⁶ represents a linear or branched C₁-C₂₆-alkyl group.

9. The lubricant composition according to one of claims 1 to 11 for which the weight ratio (a/b) between the polyalphaolefinic oil (PAO) (a) and the oil of group V (b) ranges from 0.1 to 4, preferably from 0.3 to 3.6.

10. The lubricant composition according to one of claims 1 to 12, for which the VI is greater than 220, preferably greater than 250, or even greater than 270 or 300.

11. The use of a lubricant composition according to one of claims 1 to 10, for the lubrication of a vehicle engine or for improving the lubrication of a vehicle engine
▪ during an urban cycle according to the European cycle NEDC; or
▪ during an urban cycle according to the European cycle WLTP; or
▪ during a cold cycle according to the European cycle ECE.

12. The use according to claim 11 for lubricating an engine of a hybrid vehicle.

13. The use of a lubricant composition according to one of claims 1 to 10 for improving the Fuel Eco (FE) of a lubricant or for reducing the fuel consumption of an engine, in particular of a vehicle engine, notably of an engine of a hybrid vehicle.
